# EUROPÄISCHE PATENTANMELDUNG

(11) **EP 2 402 382 A1**
(43) Veröffentlichungstag der Anmeldung: **04.01.2012**
(21) Anmeldenummer: 10165195.8
(22) Anmeldetag: 08.06.2010
(51) Int. Cl.: C08G 18/63, B01D 1/22, B01J 19/18

(54) **Verfahren zum Aufreinigen von Polyol-Dispersionen**

(71) Anmelder: BASF SE, 67056 Ludwigshafen (DE)
(72) Erfinder: Die Erfindernennung liegt noch nicht vor

(57) **Zusammenfassung**

Die vorliegende Erfindung betrifft ein Verfahren zum Aufreinigen einer Polyol-Dispersion, umfassend mindestens ein Polyol und mindestens einen Füllstoff, dadurch gekennzeichnet, dass die Polyol-Dispersion über mindestens einen Dünnschichtverdampfer gestrippt wird.

## Beschreibung

### Einführung

Die vorliegende Erfindung betrifft ein Verfahren zum Aufreinigen von Polyol-Dispersionen durch Strippen über mindestens einen Dünnschichtverdampfer, die durch das erfindungsgemäße Verfahren erhaltenen Polyoldispersionen sowie deren Verwendung zur Herstellung von Polyurethanen.

### Hintergrund

Polyol-Dispersionen umfassen eine kontinuierliche Phase (flüssig) und eine feste Phase, die in der kontinuierlichen Phase dispergiert ist.

Dabei umfasst die kontinuierliche Phase mindestens ein Polyol, und optional weitere Komponenten, wie zum Beispiel zusätzlich ein Polyisobuten. Polyole im Sinne dieser Erfindung sind alle Verbindungen, die mindestens zwei Alkoholgruppen aufweisen.

Die dispergierte feste Phase umfasst mindestens einen Füllstoff; die Füllstoffe sind dabei bevorzugt ausgewählt aus polymeren, organischen oder anorganischen Füllstoffen, oder einer Mischung daraus.

Graft-Polyole sind eine spezielle Art von Polyoldispersionen. Bei Graft-Polyolen sind die Füllstoffe ausgewählt aus polymeren Füllstoffen, insbesondere aus Copolymeren von Styrol mit Acrylnitril.

In der vorliegenden Offenbarung sind die Begriffe "Graft-Polyole", "Polymerpolyole" und "polymergefüllte Polyole" als äquivalent anzusehen.

Graft-Polyole werden in der Polyurethan (PU)-Industrie als Rohstoff eingesetzt, um die Härte-und die Elastizitätseigenschaften in PU-Weichschaumstoffen einzustellen. Es handelt sich hierbei in der Regel um Polyetherole (kontinuierliche Phase), die gefüllt sind mit einem Copolymer aus Styrol und Acrylnitril (Füllstoff, feste Phase). Beim Herstellprozess dieser Produkte wird in der Regel Styrol und Acrylnitril im Polyetherol in Gegenwart eines Makromonomers polymerisiert (Stryrol-Acrylnitril-Polymer, SAN).

Das Makromer erfüllt die Funktion der sterischen Stabilisierung der sich bildenden SAN-Partikel und verhindert somit eine Agglomeration oder Ausflockung der SAN-Partikel. Ferner können durch die verwendete Menge an Makromer die Partikelgrößen gezielt eingestellt werden. Als Makromere werden üblicherweise mehrfunktionelle Polyetherole verwendet, die nachträglich mit einer ungesättigten Bindung versehen wurden, die radikalisch mit den Comonomeren polymerisiert werden kann.

Styrol und viele andere Verbindungen erzeugen jedoch selbst in geringen Mengen einen unangenehmen Geruch und/oder andere unerwünschte Emissionen und müssen daher spätestens im Endprodukt möglichst vollständig entfernt werden.

Polyoldispersionen, wie beispielsweise Graft-Polyole, werden nach der freien radikalischen Polymerisation der ungesättigten Monomere daher einem Reinigungsschritt unterzogen. Die Entfernung flüchtiger Verbindungen, z. B. verbliebene Monomere, flüchtige organische Verbindungen (FOV), Abbauprodukte, Nebenprodukte, Lösemittel, Wasser, Alkohole, Zusatzstoffe, Geruchs- und Emissionsstoffe, aus den Polyoldispersionen, wie zum Beispiel Graft-Polyolen, wird üblicherweise bei erhöhten Temperaturen unter Vakuum durchgeführt.

Das Aufreinigen bzw. Strippen von Polymerpolyolen (PMPOs) ist in "Chemistry and Technology of Polyols for Polyurethanes", Mihail Ionescu, Rapra Technology Limited, 2005, S. 210-213 beschrieben. Es wird das Strippen einer azeotropen Mischung aus Styrol und Wasser und das Strippen unter Vakuum in einem Gegenstromsystem (Dampfstrippen, Stickstoffstrippen) beschrieben. Das Gegenstromstrippen kann batchweise oder kontinuierlich unter Verwendung klassischer Säulen mit Platten (respektive Einbauten/Böden) erfolgen.

Das batchweise Vakuumstrippen von Polymer-Polyesterolen wird in EP 0622384 beschrieben. Das batchweise Vakuumstrippen von Polymer-Polyetherolen, die batchweise hergestellt werden, wird in EP 0664306 und EP 0353070 beschrieben. Das batchweise Vakuumstrippen von Polymer-Polyetherolen, die kontinuierlich hergestellt werden, wird in WO 0000531 und WO 03097710 beschrieben. Das kontinuierliche Strippen in gepackten Säulen unter Verwendung von Dampf als Strippmittel wird in US 020080033139 und EP 1873170 offenbart.

Während des üblichen Strippvorgangs werden die Graftpolyole lange Zeit hohen Temperaturen ausgesetzt, was u. a. die folgenden Probleme verursachen kann:

Die Qualität der Dispersion wird aufgrund von thermischen Veränderungen der Polymerstrukturen wie Abbaureaktionen, Depolymerisation, Quervernetzung von Polymerpartikel verschlechtert. Beispielsweise kann es zu Phasentrennung, Viskositätserhöhung der Dispersion infolge Vernetzung der Polymerpartikel, schlechteren Filtrationseigenschaften, Farb- und Geruchsentwicklung kommen.

Zudem kann bei konventionellen Verfahren nur durch sehr lange Strippzeiten ein gewünschter niedriger Gehalt an flüchtigen Verbindungen erreicht werden.

Die lange Strippzeit führt wiederum zu Engpässen in der Produktion und somit zur Verringerung der Produktionskapazität.

Die erwähnten Probleme konnten durch die bisher bekannten Strippverfahren nicht ausgeräumt werden.

Es stellte sich somit die Aufgabe, ein flexibles, einfaches und ökonomisches Verfahren zum Strippen von Polyol-Dispersionen bereitzustellen, welches lange Exposition der Dispersionen gegenüber hohen Temperaturen vermeidet und eine gute und reproduzierbare Produktqualität liefert.

### Beschreibung der Erfindung

Es wurde nun überraschenderweise gefunden, dass die erwähnte Aufgabe durch ein Verfahren zum Aufreinigen von Polyol-Dispersionen, dadurch gekennzeichnet, dass die Polyol-Dispersionen über mindestens einen Dünnschichtverdampfer gestrippt werden, gelöst werden kann.

Der Gegenstand der vorliegenden Erfindung ist also ein Verfahren zum Aufreinigen einer Polyol-Dispersion, umfassend mindestens ein Polyol und mindestens einen Füllstoff, dadurch gekennzeichnet, dass die Polyol-Dispersion über mindestens einen Dünnschichtverdampfer gestrippt wird.

Weiter Gegenstände der vorliegenden Erfindung sind auch eine Polyoldispersion, die nach dem erfindungsgemäßen Verfahren erhältlich ist, sowie die Verwendung einer nach dem erfindungsgemäßen Verfahren herstellbaren bzw. erhältlichen Polyoldispersion zur Herstellung von Polyurethanen.

Es wird somit mit der vorliegenden Erfindung ein prozessual flexibles und wirtschaftliches Verfahren zur Aufreinigung von Polyoldispersionen bereitgestellt.

In einer bevorzugten Ausführungsform enthält die Polyol-Dispersion ein Polyol.

Bevorzugt ist mindestens eines der in der Polyoldispersion enthaltenen Polyole ausgewählt aus den Familien der Polyetherpolyole, Polyesterpolyole, Polyether-Polyester-Polyole, Polycarbonat-Polyole, Poly-THF-Polyole, oder aus Mischungen daraus, wobei Polyetherpolyole besonders bevorzugt sind.

Besonders bevorzugt sind alle der in der Polyoldispersion enthaltenen Polyole ausgewählt aus den Familien der Polyetherpolyole, Polyesterpolyole, Polyether-Polyester-Polyole, Polycarbonat-Polyole, Poly-THF-Polyole, oder aus Mischungen daraus, wobei wiederum Polyetherpolyole besonders bevorzugt sind.

Bevorzugt weist mindestens eines der in der Polyoldispersion enthaltenen Polyetherpolyole ein Molekulargewicht (Mn) von 300 - 20000 g/mol, besonders bevorzugt von 400-6000 g/mol, und/oder eine OH-Zahl von 20 - 900 mg KOH/g, besonders bevorzugt von 25-500 mg KOH/g auf.

Besonders bevorzugt weisen alle der in der Polyoldispersion enthaltenen Polyetherpolyole jeweils ein Molekulargewicht von 300 - 20000 g/mol, bevorzugter von 400-6000 g/mol, und/oder eine OH-Zahl von 20 - 900 mg KOH/g, bevorzugter von 25-500 mg KOH/g auf.

In einer bevorzugten Ausführungsform weist mindestens eines der in der Polyoldispersion enthaltenen Polyetherpolyole eine Funktionalität von 2 bis 8 auf.

In einer besonders bevorzugten Ausführungsform weisen alle der in der Polyoldispersion enthaltenen Polyetherpolyole eine mittlere Funktionalität von 2 bis 8 auf.

Die feste Phase der Polyol-Dispersion umfasst, wie bereits erwähnt, mindestens einen Füllstoff. In einer bevorzugten Ausführungsform enthält die Polyoldispersion einen Füllstoff.

Bevorzugt ist mindestens einer der in der Polyoldispersion enthaltenen Füllstoffe ausgewählt aus polymeren, organischen oder anorganischen Füllstoffen, oder einer Mischung daraus.

Besonders bevorzugt sind alle der in der Polyoldispersion enthaltenen Füllstoffe jeweils ausgewählt aus polymeren, organischen oder anorganischen Füllstoffen, oder einer Mischung daraus.

Bevorzugt ist mindestens einer, besonders bevorzugt sind alle, der Füllstoffe ausgewählt aus der Gruppe umfassend Polystyrol, Poly-(Styrol-co-Acrylnitril), Polyacrylnitril, Polyacrylat, Polymethacrylat, Polyolefine, wie z. B. Polypropylen, Polyethylen, Polyisobutylen, Polybutadien, Polyester, Polyamid, Polyvinylchlorid, Polyethylenterephthalat, Polyethylenglycol, Schwefel, Phosphor, Silikat-Materialien (wie z. B. Silica-Nanopartikel), Metalloxide, Metallcarbonate, anorganische Salze, anorganische Pigmente, Kohlenstoff (wie z. B. Graphit, Nano-Röhren, Fasern), Melamin, Harnstoff, Cellulose (wie z. B. Fasern, Nanopartikel, kristalline Cellulose).

Die Füllstoffe können untereinander vermischt werden, und die Gesamtmenge der Füllstoffe, bezogen auf den Gesamtansatz, beträgt bevorzugt zwischen 1 und 70 Gew.-%, besonders bevorzugt zwischen 5 und 55 Gew.-%.

Die Verteilung der Füllstoffe kann monomodal, bimodal oder multimodal sein.

In einer Ausführungsform beträgt die Partikelgröße mindestens eines, bevorzugt aller, der Füllstoffe jeweils von 0,05 µm - 500 µm, besonders bevorzugt von 0,1 µm - 50 µm.

Die Geometrie des Dünnschichtverdampfers ist je nach gewünschtem Durchsatz sehr unterschiedlich. Typische Apparate werden zum Beispiel von der Firma Buss-SMS-Canzler GmbH hergestellt. Je nach Anforderung (Medium, Durchsatz) können verschiedene Typen (LUWA^{®} und SAMBAY^{®}) in verschiedenen Größen zum Einsatz kommen. In einer Ausführungsform der Erfindung ist der Dünnschichtverdampfer mit beweglichen Wischblättern ausgestattet (entspricht einem SAMBAY^{®} der Firma Buss-SMS-Canzler GmbH). Auch die Anordnung der Wischerblätter kann variieren. Bei einer weiteren Ausführungsform ist der Apparat mit einem Starrflügelrotor ausgestattet (entspricht einem LUWA^{®} der Firma Buss-SMS-Canzler GmbH). Bei Durchführung des erfindungsgemäßen Verfahrens kann eine Standardapparatur, wie käuflich zu erwerben und dem Fachmann bekannt, verwendet werden. Eine derartige Standardapparatur ist beispielsweise im Lexikon Produktionstechnik, Verfahrenstechnik von Heinz M. Hiersig, Verlag Springer, 1995 beschrieben.

Die Polyol-Dispersion wird in einer Ausführungsform mit einem Verteilerring gleichmäßig entlang der Heizwand mindestens eines Dünnschichtverdampfers, bevorzugt oberhalb der obersten Wischerebene verteilt. Die Dispersion wird von den Wischerblättern ergriffen und als dünner Film über die Heizwand ausgebreitet. Die flüchtigen Komponenten verdampfen, strömen nach oben und werden abgeführt. Die schwersiedenden Komponenten werden schraubenförmig den Dünnschichtverdampfer entlang der Schwerkraft und/ oder dem Impuls folgend bewegt und anschließend ausgetragen.

In einer Ausführungsform wird ein Dünnschichtverdampfer verwendet.

Es können auch mindestens zwei Dünnschichtverdampfer verwendet werden, bevorzugt gleichzeitig, wobei die mindestens zwei Dünnschichtverdampfer in Reihe oder parallel geschaltet sind.

In einer Ausführungsform beträgt der Druck in mindestens einem der Dünnschichtverdampfer zwischen 0,001 mbar und 1100 mbar, bevorzugt zwischen 0,01 mbar und 500 mbar, besonders bevorzugt zwischen 0,1 mbar und 100 mbar.

In einer bevorzugten Ausführungsform beträgt der Druck in allen Dünnschichtverdampfern jeweils zwischen 0,001 mbar und 1100 mbar, bevorzugter zwischen 0,01 mbar und 500 mbar, besonders bevorzugt zwischen 0,1 mbar und 100 mbar.

Eine bevorzugte Ausführungsform der vorliegenden Erfindung sieht vor, dass zusätzlich Wasserdampf, ein Gas und/oder trockene Luft, insbesondere Inertgas, zur Verbesserung der Entfernung flüchtiger Komponenten eingesetzt wird. Es kann entweder im Gleichstrom mit der Flüssigkeit oder im Gegenstrom durch den Apparat geleitet werden.

In einer weiteren Ausführungsform liegt die Polyol-Dispersion auf der Oberfläche mindestens eines Dünnschichtverdampfers in Form eines Films vor, der eine durchschnittliche Dicke zwischen 0,1 µm und 20,0 mm, bevorzugt zwischen 1 µm und 10 mm, besonders bevorzugt zwischen 5 µm und 5 mm aufweist.

Bevorzugt liegt die Polyoldispersion auf der Oberfläche aller Dünnschichtverdampfer jeweils in Form eines Films vor, der eine durchschnittliche Dicke zwischen 0,1 µm und 20,0 mm, bevorzugter zwischen 1 µm und 10 mm, besonders bevorzugt zwischen 5 µm und 5 mm aufweist.

In einer Ausführungsform beträgt die Temperatur mindestens eines der Dünnschichtverdampfer zwischen 5 und 400 °C, bevorzugt zwischen 80 und 300 °C, besonders bevorzugt zwischen 100 und 270 °C.

In einer bevorzugten Ausführungsform beträgt die Temperatur aller Dünnschichtverdampfer jeweils zwischen 5 und 400 °C, bevorzugter zwischen 80 und 300 °C, besonders bevorzugt zwischen 100 und 270 °C.

Die Verweilzeit der Polyol-Dispersion in mindestens einem der Dünnschichtverdampfer beträgt in der Regel zwischen 5 und 600 Sekunden, bevorzugt zwischen 10 und 300 Sekunden.

Bevorzugt beträgt die Verweilzeit in allen Dünnschichtverdampfern jeweils zwischen 5 und 600 Sekunden, besonders bevorzugt zwischen 10 und 300 Sekunden.

Nach Durchlaufen des erfindungsgemäßen Verfahrens enthält eine Polyoldispersion in der Regel einen deutlich geringeren Anteil flüchtiger Verbindungen als vor Beginn des erfindungsgemäßen Verfahrens. Zudem liegt der Gehalt flüchtiger Verbindungen nach Durchlaufen des erfindungsgemäßen Verfahrens in der Regel genauso niedrig oder sogar niedriger als nach dem Durchlaufen eines konventionellen Reinigungsverfahrens.

Die weiteren Produkteigenschaften einer Polyoldispersion, wie zum Beispiel die Form und Größe der in der Polyoldispersion enthaltenen Partikel, bleiben nach Durchlaufen des erfindungsgemäßen Verfahrens in der Regel erhalten.

In einer Ausführungsform weist die Polyol-Dispersion nach dem letzten Verfahrensschritt des erfindungsgemäßen Verfahrens einen Gehalt flüchtiger, insbesondere organischer, Substanzen von < 500 ppm, bevorzugt von < 50 ppm auf. Bevorzugt weist die Polyol-Dispersion nach Durchlaufen des erfindungsgemäßen Verfahrens einen Gehalt an Styrol von < 10 ppm auf.

Ein weiterer Gegenstand der vorliegenden Erfindung ist die nach dem erfindungsgemäßen Verfahren erhältliche, somit aufgereinigte Polyoldispersion, sowie deren Verwendung zur Herstellung von Polyurethanen (PU); die nach dem erfindungsgemäßen Verfahren erhältlichen Polyol-Dispersionen können vorteilhaft zur Herstellung von Polyurethanen verwendet werden. Die so erhältlichen Polyurethane sind ebenfalls ein Gegenstand der vorliegenden Erfindung.

Die auf diese Weise hergestellten Polyurethane können zum Beispiel Hart- oder Weichschaumpolyurethane sein. Insbesondere bei Anwendungen, bei denen eine geringe Emission flüchtiger Substanzen von Bedeutung ist, können die erfindungsgemäß hergestellten Polyurethane vorteilhaft eingesetzt werden. Als Beispiele können der Einsatz erfindungsgemäß hergestellter Polyurethane als Grundstoff von Matratzen oder im Automobilbau genannt werden.

Ein weiterer Gegenstand der Erfindung ist somit ein Verfahren zur Herstellung eines Polyurethans durch Umsetzung einer nach dem erfindungsgemäßen Verfahren herstellbaren bzw. aufreinigbaren Polyoldispersion mit einem oder mehreren organischen Diisocyanaten (oder Polyisocyanaten).

Die Herstellung der Polyurethane kann nach den bekannten Verfahren, diskontinuierlich oder kontinuierlich, beispielsweise mit Reaktionsextrudern oder dem Bandverfahren nach "one-shot" oder dem Prepolymerverfahren (auch mehrstufige Prepolymerverfahren wie in US6790916B2, bevorzugt nach dem "one-shot"-Verfahren erfolgen. Bei diesen Verfahren können die zur Reaktion kommenden Komponenten Polyol, Kettenverlängerer, Isocyanat und gegebenenfalls Hilfsstoffe und Additive (insbesondere UV-Stabilisatoren) nacheinander oder gleichzeitig miteinander vermischt werden, wobei die Reaktion unmittelbar einsetzt.

Die Herstellung der Polyurethane erfolgt in der Regel durch Umsetzung von Diisocyanaten mit Verbindungen mit mindestens zwei mit Isocyanatgruppen reaktiven Wasserstoffatomen, vorzugsweise difunktionellen Alkoholen, besonders bevorzugt mit den erfindungsgemäß herstellbaren bzw. aufreinigbaren Polyoldispersionen.

Als Diisocyanate werden übliche aromatische, aliphatische und/oder cycloaliphatische Diisocyanate, beispielsweise Diphenyl-Methan-Diisocyanat (MDI), Toluylendiisocyanat (TDI), Tri-, Tetra-, Penta-, Hexa-, Hepta- und/oder Oktamethylendiisocyanat, 2-Methyl-pentamethylendiisocyanat-1,5, 2-Ethyl-butylen-diisocyanat-1,4, 1-Isocyanato-3,3,5-trimethyl-5-isocyanatomethyl-cyclohexan (isophoron-diisocyanat, IPDI), 1,4- und/oder 1,3-Bis(isocyanatomethyl)cyclohexan (HXDI), 1,4-Cyclohexan-diisocyanat, 1-Methyl-2,4- und/oder-2,6-cyclohexan-diisocyanat, 4,4'-, 2,4'- und/oder 2,2'-Dicyclo-hexylmethan-diisocyanat eingesetzt.

Als gegenüber Isocyanaten reaktive Verbindungen werden, wie beschrieben, bevorzugt die erfindungsgemäß herstellbaren bzw. aufreinigbaren Polyoldispersionen eingesetzt. In Gemisch mit diesen können allgemein bekannte Polyhydroxylverbindungen mit Molekulargewichten (Mn) von 500 bis 8000 g/mol, bevorzugt 600 bis 6000 g/mol, und bevorzugt einer mittleren Funktionalität von 1,8 bis 8, bevorzugt 1,9 bis 6, insbesondere 2 eingesetzt werden, beispielsweise Polyesteralkohole, Polyetheralkohole und/ oder Polycarbonatdiole.

Zu den gegenüber Isocyanaten reaktiven Verbindungen gehören auch die Kettenverlängerungsmittel. Als Kettenverlängerungsmittel können allgemein bekannte, insbesondere zweifunktionelle, Verbindungen eingesetzt werden, beispielsweise Diamine und/oder Alkandiole mit 2 bis 10 C-Atomen im Alkylenrest, insbesondere Ethylenglykol und/ oder Butandiol-1,4, und/oder Hexandiol und/ oder Di- und/oder Tri-oxyalkylen-glykole mit 3 bis 8 Kohlenstoffatomen im Oxyalkylenrest, bevorzugt entsprechende Oligo-Polyoxypropylenglykole, wobei auch Mischungen der Kettenverlängerer eingesetzt werden können. Als Kettenverlängerer können auch 1,4-Bis-(hydroxymethyl)-benzol (1,4-BHMB), 1,4-Bis-(hydroxyethyl)-benzol (1,4-BHEB) oder 1,4-Bis-(2-hydroxyethoxy)-benzol (1,4-HQEE) zum Einsatz kommen. Bevorzugt werden als Kettenverlängerer Ethylenglykol und Hexandiol, besonders bevorzugt Ethylenglykol.

Üblicherweise werden Katalysatoren eingesetzt, welche die Reaktion zwischen den NCO-Gruppen der Diisocyanate und den Hydroxylgruppen der Aufbaukomponenten beschleunigen, beispielsweise tertiäre Amine, wie Triethylamin, Dimethylcyclohexyl-amin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)- acetylacetonat, Zinnverbindungen, wie Zinndiacetat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung eingesetzt.

Neben Katalysatoren können den Aufbaukomponenten auch übliche Hilfsstoffe hinzugefügt werden. Genannt seien beispielsweise oberflächenaktive Substanzen, Flammschutzmittel, Keimbildungsmittel, Gleit- und Entformungshilfen, Farbstoffe und Pigmente, Inhibitoren, Stabilisatoren gegen Hydrolyse, Licht, Hitze, Oxidation oder Verfärbung, Schutzmittel gegen mikrobiellen Abbau, anorganische und/oder organische Füllstoffe, Verstärkungsmittel und Weichmacher.

Nähere Angaben über die oben genannten Hilfsmittel- und Zusatzstoffe sind der Fachliteratur zu entnehmen, zum Beispiel aus "Plastics Additive Handbook", 5th Edition, H. Zweifel, ed, Hanser Publishers, München, 2001, H. Saunders und K. C. Frisch "High Polymers", Band XVI, Polyurethane, Teil 1 und 2, Verlag Interscience Publishers 1962 and 1964, Taschenbuch für Kunststoff-Additive von R. Gachter und H. Muller (Hanser Verlag München 1990) oder DE-A 29 01 774.

Apparaturen zur Herstellung von Polyurethanen sind dem Fachmann bekannt; siehe zum Beispiel Kunststoffhandbuch, Band VII, Polyurethane, Carl- Hanser-Verlag, München 1. Auflage 1966, herausgegeben von Dr. R Vieweg und Dr. A. Höchtlen, sowie 2. Auflage 1983 und die 3. neubearbeitete Auflage 1993, herausgegeben von Dr. G. Oertel.

### Beispiele

Im Folgenden sollen einige Beispiele zur Erläuterung der Erfindung dargestellt werden. Keinesfalls sollen diese Beispiele den Schutzumfang der vorliegenden Erfindung einschränken; sie sind nur illustrierend zu verstehen.

In allen Beispielen wurde ein handelsüblicher Dünnschichtverdampfer verwendet.

Der Innendurchmesser betrug ca. 5 cm und die Länge des Films betrug ca. 45 cm. Die Rührerdrehzahl betrug bei allen Versuchen 300 UpM (Umdrehungen/Minute). Das Vakuum lag bei allen Beispielen im Bereich von 0.4 bis 1.0 mbar. Die Versuche unterschieden sich hinsichtlich der Filmtemperatur, des Volumenstroms und in der zugeführten Strippgasmenge (Stickstoff).

In allen Beispielen wurde ein Graftpolyol folgender Zusammensetzung eingesetzt: Poly-(Styrol-co-Acrylnitril)dispersion (45% Feststoffgehalt) in Glycerin-gestartetem PO-reichen Polyetherpolyol (Mw 2800 g/ mol, OH-Zahl 55 mg KOH/ g).

Der zu entfernende Restmonomergehalt betrug in allen Beispielen für Acrylnitril ca. 6200 ppm und für Styrol ca. 5500 ppm.

In folgender Tabelle sind die Versuchsparameter und die Versuchsergebnisse aller 7 Beispiele aufgeführt:

**Tabelle 1: Versuchsdaten und Versuchsergebnisse der Beispiele 1 bis 7**

| **Beispiel** | **Druck** | **Zulauf** | **Temperatur** | **Stickstoff** | **Styrol** | **Acrylnitril** |
|---|---|---|---|---|---|---|
| | mbar | kg/h | °C | NL/h | ppm | ppm |
| **1** | 0.38 | 1 | 200 | 0 | 100 | 30 |
| **2** | 0.55 | 2 | 200 | 0 | 180 | 50 |
| **3** | 0.39 | 1 | 240 | 0 | 70 | 20 |
| **4** | 0.5 | 2 | 240 | 0 | 70 | 20 |
| **5** | 0.64 | 1 | 240 | 0.1 | 40 | 20 |
| **6** | 0.89 | 1 | 240 | 0.3 | <10 | <10 |
| **7** | 0.97 | 2 | 240 | 0.3 | 15 | <10 |

Bei einer Produkttemperatur von 240°C und einem zusätzlichen Strippgasstrom konnte das Graftpolyol auf die gewünschten Restmonomergehalte von Styrol und Acrylnitril abgereichert werden. Bei den Beispielen 6 und 7 wurden die Zielwerte von < 10 ppm Styrol und Acrylnitril erreicht. Die Temperatur betrug dabei 240 °C und der Stickstoffstrom betrug 0.3 Normliter/Stunde. Der Volumenstrom betrug im Beispiel 6 1 kg/h und im Beispiel 7 betrug er 2 kg/h.

Somit bietet das erfindungsgemäße Verfahren ein prozessual flexibles und wirtschaftliches Verfahren zur Aufreinigung von Polyoldispersionen, welches lange Exposition der Dispersionen gegenüber hohen Temperaturen vermeidet, leicht anzuwenden ist und eine gute und reproduzierbare Produktqualität liefert.

## Patentansprüche

1. Verfahren zum Aufreinigen einer Polyol-Dispersion, umfassend mindestens ein Polyol und mindestens einen Füllstoff, **dadurch gekennzeichnet, dass** die Polyol-Dispersion über mindestens einen Dünnschichtverdampfer gestrippt wird.

2. Verfahren nach Anspruch 1, wobei ein Dünnschichtverdampfer verwendet wird.

3. Verfahren nach Anspruch 1, wobei mindestens zwei Dünnschichtverdampfer verwendet werden, wobei die mindestens zwei Dünnschichtverdampfer in Reihe oder parallel geschaltet sind.

4. Verfahren nach einem der Ansprüche 1 bis 3, wobei die Polyol-Dispersion auf der Oberfläche mindestens eines Dünnschichtverdampfers in Form eines Films vorliegt, der eine durchschnittliche Dicke zwischen 0,1 µm und 20,0 mm, bevorzugt zwischen 1 µm und 10 mm, besonders bevorzugt zwischen 5 µm und 5 mm, aufweist.

5. Verfahren nach einem der Ansprüche 1 bis 4, wobei die Verweilzeit der Polyol-Dispersion in mindestens einem der Dünnschichtverdampfer zwischen 5 und 600 Sekunden, bevorzugt zwischen 10 und 300 Sekunden beträgt.

6. Verfahren nach einem der Ansprüche 1 bis 5, wobei die Temperatur mindestens eines der Dünnschichtverdampfer zwischen 5 und 400 °C, bevorzugt zwischen 80 und 300 °C, besonders bevorzugt zwischen 100 und 270 °C, beträgt.

7. Verfahren nach einem der Ansprüche 1 bis 6, wobei der Druck in mindestens einem der Dünnschichtverdampfer zwischen 0,001 mbar und 1100 mbar, bevorzugt zwischen 0,01 mbar und 500 mbar, besonders bevorzugt zwischen 0,1 mbar und 100 mbar beträgt.

8. Verfahren nach einem der Ansprüche 1 bis 7, wobei die Polyol-Dispersion ein Polyol enthält.

9. Verfahren nach einem der Ansprüche 1 bis 8, wobei mindestens eines der in der Polyol-Dispersion enthaltenen Polyole ausgewählt ist aus den Familien der Polyetherpolyole, Polyesterpolyole, Polyether-Polyester-Polyole, Polycarbonat-Polyole, Poly-THF-Polyole, oder aus Mischungen daraus, bevorzugt aus der Familie der Polyetherpolyole.

10. Verfahren nach Anspruch 9, wobei mindestens eines der in der Polyol-Dispersion enthaltenen Polyetherpolyole ein Molekulargewicht (Mn) von 300 - 20000 g/mol, bevorzugt 400-6000 g/mol, und/oder eine OH-Zahl von 20 - 900 mg KOH/g, bevorzugt 25-500 mg KOH/g aufweist.

11. Verfahren nach einem der Ansprüche 1 bis 10, wobei die Polyoldispersion einen Füllstoff enthält.

12. Verfahren nach einem der Ansprüche 1 bis 11, wobei mindestens einer der in der Polyoldispersion enthaltenen Füllstoffe ausgewählt ist aus polymeren, organischen oder anorganischen Füllstoffen, oder einer Mischung daraus.

13. Verfahren nach Anspruch 12, wobei die Gesamtmenge der Füllstoffe, bezogen auf den Gesamtansatz, von 1 - 70 Gew. %, bevorzugt 5 - 55 Gew. %, beträgt, und/oder wobei die mittlere Partikelgröße mindestens eines der Füllstoffe von 0,05 µm - 500 µm, bevorzugt von 0,1 µm - 50 µm beträgt.

14. Polyoldispersion, erhältlich durch das Verfahren nach einem der Ansprüche 1 bis 13.

15. Verwendung der Polyoldispersion gemäß Anspruch 14 zur Herstellung von Polyurethanen.
